# EUROPÄISCHE PATENTANMELDUNG

(11) **EP 4 759 762 A1**
(43) Veröffentlichungstag der Anmeldung: **17.06.2026**
(21) Anmeldenummer: 25211049.9
(22) Anmeldetag: 24.10.2025
(51) Int. Cl.: B65G 69/32, B65G 69/28, B65G 69/00

(54) **SPALTABDICHTUNG, DAMIT VERSEHENE LADEBRÜCKENANORDNUNG SOWIE VERWENDUNG DERSELBEN UND HERSTELLVERFAHREN**

(30) Priorität: 10.12.2024 DE 102024137009
(71) Anmelder: Rima Abdichtungstechnik GmbH, 33803 Steinhagen (DE)
(72) Erfinder: Michalski, Daniel, 33803 Steinhagen (DE)
(74) Vertreter: KASTEL Patentanwälte PartG mbB

(57) **Zusammenfassung**

Die Erfindung betrifft eine Spaltabdichtung (10) zum Abdichten eines Spalts zwischen einer beweglichen Plattform (64) und einem Rahmen (66) einer Ladebrücke (12), mit einem Dichtungsprofil (14), welches aus wenigstens einem länglichen, streifenförmigen reversibel verformbaren Flächenelement (18) gebildet ist. Zur Verbesserung der Spaltabdichtung hinsichtlich einfacher Herstellung und Langlebigkeit ist das Flächenelement (18) derart zu einer Schlaufe (20) geformt ist, dass ein erster streifenförmiger Oberflächenbereich (22) und ein zweiter streifenförmiger Oberflächenbereich (24), die sich auf der gleichen Seite des Flächenelements (18) mit Abstand zueinander befinden, zueinander gerichtet aneinander befestigt sind. Dadurch ist ein erster Längsrandbereich (26) des Dichtungsprofils (14) als ein relativ zur Schlaufe (20) gesehen dünnerer Befestigungsbereich (28) ausgebildet ist, während an dem zweiten Längsrandbereich (32) des Dichtungsprofils (14) die relativ zum Befestigungsbereich (28) gesehen dickere Schlaufe (20) ausgebildet ist, welche in dem Spalt (62) entsprechend elastisch verformt eine Abdichtung bewirkt.

## Beschreibung

Die Erfindung betrifft eine Spaltabdichtung zum Abdichten eines Spalts zwischen einer beweglichen Plattform und einem Rahmen einer Ladebrücke, mit einem Dichtungsprofil, welches aus wenigstens einem länglichen, streifenförmigen reversibel verformbaren Flächenelement gebildet ist und vorzugsweise auch einem Magnetstreifen. Weiter betrifft die Erfindung eine Ladebrückenanordnung mit einer solchen Spaltabdichtung. Weiter betrifft die Erfindung eine Verwendung einer solchen Spaltabdichtung. Schließlich betrifft die Erfindung ein Verfahren zum Herstellen einer solchen Spaltabdichtung.

Zum technologischen Hintergrund und zum Stand der Technik wird auf folgende Literaturstellen verwiesen:
[1] JP2010 038 434 A
[2] US 5 442 825 A
[3] EP 2 986 544 B1
[4] DE 39 37 373 A1
[5] DE 20 2012 006 576 U1
[6] US 2010 313 535 A1
[7] US 2009/165 224 A1
[8] WO 2006/098 592 A1
[9] US 2009/301 671 A1
[10] "VERLADETECHNIK", Firmenbroschüre der Hörmann KG Verkaufsgesellschaft, mit dem Druckvermerk "Stand 12.2023 / Druck 12.2023 / HF 86278 DE / SAP 368783 / G.XX / Gedruckt auf 100 % Recyclingpapier", heruntergeladen am 22.10.2024 unter https://www.hoermann.de/mediacenter/download/205067de/Verladetechni k.pdf?20241031123237

Aus den Literaturstellen [1] bis [9] sind unterschiedliche Spaltabdichtungen bekannt. [10] zeigt aktuellen Stand der Technik zu Anlagen der Verladetechnik einschließlich Ladebrücken.

Die Erfindung hat sich zur Aufgabe gestellt, eine Spaltabdichtung für Ladebrücken oder dergleichen zu schaffen, die hinsichtlich einfacher Handhabung, Zuverlässigkeit und Langlebigkeit verbessert ist.

Zum Lösen dieser Aufgabe schafft die Erfindung eine Spaltabdichtung nach Anspruch 1. Eine damit versehene Ladebrückenanordnung ist Gegenstand des Nebenanspruchs.

Vorteilhafte Ausgestaltungen sind Gegenstand der Unteransprüche.

Die Erfindung schafft gemäß einem Aspekt davon eine Spaltabdichtung zum Abdichten eines Spalts zwischen einer beweglichen Plattform und einem Rahmen einer Ladebrücke, mit einem Dichtungsprofil, welches aus wenigstens einem länglichen, streifenförmigen reversibel verformbaren Flächenelement gebildet ist, wobei das Flächenelement derart zu einer Schlaufe geformt ist, dass ein erster streifenförmiger Oberflächenbereich und ein zweiter streifenförmiger Oberflächenbereich, die sich auf der gleichen Seite des Flächenelements mit Abstand zueinander befinden, zueinander gerichtet aneinander befestigt sind, so dass ein erster Längsrandbereich des Dichtungsprofils als ein relativ zur Schlaufe gesehen dünnerer Befestigungsbereich ausgebildet ist, in dem die die Oberflächenbereiche aufweisenden Abschnitte des Flächenelements fest miteinander verbunden sind, und an dem zweiten Längsrandbereich die einen Hohlraum umschließende, relativ zum Befestigungsbereich gesehen dickere Schlaufe ausgebildet ist.

Im Gegensatz zum Stand der Technik nach [3], wo eine Omegaform des Dichtprofils als besonders vorteilhaft erachtet wird, haben Ausführungsformen des Dichtungsprofils somit einen etwa tropfenförmigen oder birnenförmigen Querschnitt mit einem dünneren Längsrandbereich und einem durch die Umbiegung der Schlaufe gebildeten dickeren Längsrandbereich. Mit dem dünneren Längsrandbereich lässt sich das Dichtungsprofil bei auf einander zu Bewegung der den Spalt begrenzenden Elemente in den Spalt einführen. Dadurch erfolgt ein sehr schonendes Einführen des Dichtungsprofil in den Spalt, so dass dieses sehr langlebig ist und die Spaltabdichtung insgesamt wenig Verschleiß unterliegt.

Einige Ausführungsformen der Spaltabdichtung haben einen Befestigungs- und Trägerstreifen zum Halten und Befestigen der Spaltabdichtung an der Plattform oder dem Rahmen. Insbesondere ist der Befestigungs- und Trägerstreifen an einer Grundfläche des Dichtungsprofils befestigt, die sich zwischen den Längsrandbereichen des Dichtungsprofils erstreckt.

Bei einigen Ausführungsformen ist der Befestigungs- und Trägerstreifen als Magnetstreifen zur magnetischen Befestigung ausgebildet. Bei einigen Ausführungsformen erstreckt sich der Befestigungs- und Trägerstreifen über einen Großteil der Grundfläche des Dichtungsprofils. Bei einigen Ausführungsformen erstreckt sich der Befestigungs- und Trägerstreifen von dem ersten Längsrandbereich aus über mehr als die Hälfte oder mehr als zwei Drittel der Grundfläche. Bei einigen Ausführungsformen ist der Befestigungs- und Trägerstreifen auf einer Außenseite des Befestigungsbereichs und zumindest auf einem Teil einer Außenfläche der Schlaufe befestigt.

Die Grundfläche ist an einer Seite der Tropfen- oder Birnenform des Dichtungsprofil ausgebildet. Dort lässt sich das Dichtungsprofil großflächig an einem der relativ beweglichen Elemente der Ladebrücke befestigen. Ein zusätzlicher Befestigungs- und Trägerstreifen verstärkt das Dichtungsprofil im Bereich von dessen Befestigung an dem Element und versteift es hier. Die Schlaufe bleibt weiterhin flexibel und kann bei Einführen in den Spalt zusammengedrückt werden.

Besonders bevorzugt wird an der Grundfläche ein Magnetstreifen vorgesehen. In der Regel sind die Elemente einer Ladebrücke aus Stahl oder dergleichen Materialien, an denen Magnete einfach haften. Wenn ein Magnetstreifen zur Befestigung vorgesehen wird, lässt sich die Spaltabdichtung sehr einfach befestigen, immer wieder bei Bedarf in der Lage korrigieren, entfernen oder austauschen. Eine magnetische Befestigung ist daher besonders bevorzugt, wenngleich bei einigen Ausführungsformen auch andere Befestigungen, wie z.B. Kleben, Verschweißen oder ein Befestigen mittels Klettverbindung, der Spaltabdichtung an einem der spaltbegrenzenden Elemente, möglich sind.

Bei einigen Ausführungsformen ist vorgesehen, dass das Dichtungsprofil insgesamt aus dem einteiligen Flächenelement gebildet ist.

Bei einigen Ausführungsformen ist vorgesehen, dass im Inneren des Hohlraums zwischen den die Schlaufe ausbildenden Bereichen des Flächenelements ein innerer Streifen aus reversibel verformbarem flächigem Material angeordnet ist, wobei der innere Streifen fest in dem Befestigungsbereich zwischen dem ersten und dem zweiten Oberflächenbereich befestigt ist und wobei eine freie Endkante des inneren Streifens in die Umbiegung der Schlaufe hineinragt.

Bei einigen Ausführungsformen ist vorgesehen, dass der innere Streifen aus einem ersten Randbereich des Flächenelements gebildet ist, wobei die Schlaufe um diesen inneren Streifen herum umgeschlagen ist, wobei der erste Oberflächenbereich an einem mittleren Bereich des Flächenelements ausgebildet ist, welcher mittlere Bereich relativ zu dem inneren Streifen umgefaltet ist und an diesem befestigt ist, und wobei der zweite Oberflächenbereich an dem zweiten Randbereich des Flächenelements ausgebildet ist.

Bei einigen Ausführungsformen ist vorgesehen, dass der innere Streifen eine größere Breite als die Schlaufe hat, wobei der innere Streifen in dem Hohlraum der Schlaufe mit wenigstens einer Biegung gebogen angeordnet ist, um die Schlaufe in Dickenrichtung aufzuspannen.

Bei einigen Ausführungsformen ist vorgesehen, dass der innere Streifen in der Schlaufe J-förmig oder S-förmig gebogen ist.

Die Befestigungen der unterschiedlichen Streifen, Bereiche, Abschnitte oder Teile der Spaltabdichtung kann auf unterschiedliche Arten erfolgen. Beispielsweise können die Bereiche des Dichtungsprofils miteinander vernäht sein oder durch ein Klemmelement oder Klammern miteinander verbunden sein. Auch ein Verschweißen oder ein Eintauchen in eine Verbindungsmasse ist möglich.

Bei einigen Ausführungsformen ist vorgesehen, dass der Befestigungsbereich innen eine Klebung aufweist. Bei einigen Ausführungsformen ist vorgesehen, dass der erste und der zweite Oberflächenbereich miteinander verklebt sind. Bei einigen Ausführungsformen ist vorgesehen, dass der erste und der zweite Oberflächenbereich mit dem inneren Streifen dazwischen verklebt sind. Bei einigen Ausführungsformen ist vorgesehen, dass der Befestigungs- und Trägerstreifen auf dem Dichtungsprofil aufgeklebt ist.

Unterschiedliche flächige Materialien sind für das Flächenelement oder gegebenenfalls den inneren Streifen möglich. Beispiele für mögliche Flächenmaterialien umfassen ein Flächenmaterial mit wenigstens einer Folienlage und einer Textillage, eine Plane aus Kunststoff mit Textilverstärkung, eine Kunststofffolie, eine faserverstärkte oder gewebeverstärkte Kunststofffolie, ein mit Kunststoff beschichtetes Textilgewebe, ein gummiertes Flächenmaterial, Gummimaterial und textil- oder faserverstärktes Gummimaterial. Besonders bevorzugt kommt ein vorzugsweise wasserdichtes, winddichtes und/oder wetterfestes Flächenmaterial zum Einsatz, wie es allgemein auch bei LKW-Planen oder Zeltplanen zum Einsatz kommt.

Gemäß einem weiteren Aspekt schafft die Erfindung eine Ladebrückenanordnung, umfassend eine relativ zu einem Rahmen bewegliche Plattform und eine Spaltabdichtung nach einer der voranstehenden Ausgestaltungen zum Abdichten eines Spalts zwischen der Plattform und dem Rahmen.

Bei einigen Ausführungsformen ist vorgesehen, dass die Spaltabdichtung mittels des Magnetstreifens an der Plattform oder an dem Rahmen befestigt ist.

Bei einigen Ausführungsformen ist vorgesehen, dass die Spaltabdichtung mit dem dünneren zweiten Längsrandbereich nach innen in den Spalt gerichtet und mit der Schlaufe nach außen hin gerichtet in dem Spalt angeordnet ist.

Gemäß einem weiteren Aspekt schafft die Erfindung eine Verwenden einer Spaltabdichtung nach einer der voranstehenden Ausgestaltungen zum Abdichten eines Spalts an einer Ladebrücke, wobei der dünnere Längsrandbereich nach unten gerichtet angeordnet wird und beim Absenken der Ladebrücke in den Spalt eingeführt wird und die Schlaufe nachgeführt wird.

Einige Ausführungen der Verwendung umfassen ein Befestigen des Dichtprofils mittels des Magnetstreifens an einem beweglichen Element, einer Plattform oder einem stationären Element oder einem Rahmen der Ladebrücke.

Einige Ausführungen der Verwendung umfassen ein Einführen des Dichtprofils mit dem Befestigungsbereich nach vorne in den Spalt beim Einfahren eines beweglichen Elements der Ladebrücke in einen Rahmen der Ladebrücke.

Einige Ausführungen der Verwendung umfassen ein Zusammendrücken der Schlaufe durch Einführen in den Spalt, wobei die Schlaufe durch deren Eigenspannung und/oder durch den inneren Streifen gegen die Begrenzungen des Spalts gedrückt wird.

Gemäß einem weiteren Aspekt schafft die Erfindung ein Verfahren zum Herstellen einer Spaltabdichtung zum Abdichten eines Spalts zwischen einer beweglichen Plattform und einem Rahmen einer Ladebrücke, insbesondere zum Herstellen einer Spaltabdichtung nach einem der Ansprüche 1 bis 9, umfassend:
a) Bereitstellen eines länglichen, streifenförmigen reversibel verformbaren Flächenelement,
b) Bilden einer Schlaufe durch Umschlagen des Flächenelements, so dass auf der gleichen Seite des Flächenelements angeordnete Oberflächenbereiche zueinander liegen und Befestigen der zueinander gerichteten Oberflächenbereiche aneinander, so dass an einem ersten Längsrandbereich des so gebildeten Dichtungsprofils ein dünnerer Befestigungsbereich und an dem anderen, zweiten Längsrandbereich die Umbiegung der Schlaufe mit einem Hohlraum dazwischen gebildet wird und
c) Befestigen eines Befestigungs- und Trägerstreifens, insbesondere Magnetstreifen, an einer auf einer Seite der Schlaufe ausgebildeten Grundfläche des Dichtungsprofils.

Bei einigen Ausführungsformen umfasst Schritt a) wenigstens einen, mehrere oder alle der Schritte:
a1) Bereitstellen des Flächenelements aus einem flächigen reversibel oder textilartig verformbaren Material aus der Gruppe, die ein Flächenmaterial mit wenigstens einer Folienlage und einer Textillage, eine Plane aus Kunststoff mit Textilverstärkung, eine Kunststofffolie, eine faserverstärkte oder gewebeverstärkte Kunststofffolie, ein mit Kunststoff beschichtetes Textilgewebe, ein gummiertes Flächenmaterial, Gummimaterial und textil- oder faserverstärktes Gummimaterial umfasst;
a2) Bereitstellen des Flächenelements durch Abtrennen von einem Stück wetterfester Plane.

Bei einigen Ausführungsformen umfasst Schritt b) wenigstens einen, mehrere oder alle der Schritte:
b1) Einbringen eines zusätzlichen inneren Streifens in die Schlaufe,
b2) Umfalten des Flächenelements, so dass ein erster Randbereich des Flächenelements einen zusätzlichen inneren Streifen innerhalb der Schlaufe bildet;
b3) Einbringen eines breiter als das Dichtprofil ausgebildeten inneren Streifens in der Schlaufe, so dass der innere Streifen innerhalb der Schlaufe wenigstens eine Biegung aufweist;
b4) Umschlagen des Flächenelements zum Bilden der Schlaufe, gegebenenfalls um den inneren Streifen herum;
b5) Verbinden der zueinander gerichteten streifenförmigen Oberflächenbereiche an einem ersten Längsrandbereich des durch die Schlaufe und gegebenenfalls einen inneren Streifen gebildeten Dichtungsprofils, insbesondere durch Verkleben;
b6) Anbringen eines Träger- oder Befestigungsstreifens, insbesondere Magnetstreifens auf eine seitlich an der Schlaufe ausgebildeten Grundfläche.

Schritt c) umfasst bei einigen Ausführungsformen insbesondere magnetisches Befestigen der Spaltabdichtung, insbesondere mittels des Magnetstreifens.

Einige Ausführungsformen betreffen eine magnetische Spaltabdichtung für Verladetechnik. Die Erfindung liegt insbesondere auf dem Gebiet der Bau- und Gebäudetechnik.

Besonders bevorzugte Ausgestaltungen der Erfindung sollen insbesondere dazu dienen, den Spalt zwischen dem Korpus einer Ladebrücke und der Ladebrücke bzw. den Spalt zwischen einer Ladebrücke und dem Rahmen sicher und effizient abzudichten. Bei herkömmlichen Ladebrücke entsteht zwischen den beiden Strukturen ein offener Spalt, der nicht nur Energieverluste und Zugluft verursacht, sondern auch das Eindringen von Staub, Schmutz und Witterungseinflüssen zulässt.

Die vorzugsweise magnetische Spaltabdichtung gemäß Ausführungsformen der Erfindung schließt diesen Spalt ab, ohne dass eine feste Verbindung oder aufwendige mechanische Installationen nötig sind. Sie bietet eine flexible, leicht montierbare und langlebige Lösung, die magnetisch an die Ladebrücke angebracht und eine zuverlässige Barriere bildet. Auf diese Weise tragen bevorzugte Ausgestaltungen der Erfindung zur Erhöhung der Energieeffizienz und zur Verbesserung der Arbeitsbedingungen an der Verladestation bei und schützen zudem gelagerte Waren vor äußeren Einflüssen.

Bevorzugte Ausgestaltungen der Erfindung sind aus nur sehr wenigen Elementen und einfachen und kostengünstig erhältlichen Materialien aufgebaut. Beispielsweise ist eine konkrete Ausführungsform der Spaltabdichtung aufgebaut aus folgenden Materialien:
- PVC-Plane mit Trägergewebe nach DIN EN ISO 2076 und einem Flächengewicht von 650 g/m² (Beispiel, bei einigen Ausführungsformen sind eine Plane mit einem Flächengewicht zwischen 300 g/m² bis 1500 g/m² vorgesehen).
- Handelsübliche Magnetfolie, beispielsweise in 1 mm Materialstärke (Materialstärke bspw. im Bereich 0,5 mm bis 3 mm).
- Reaktiver Polyurethan-Hotmelt - Schmelzklebstoff (auch andere Klebstoffe oder andere Verbindungstechniken möglich).

Einige Ausführungsformen haben insbesondere folgendes Wirkprinzip und folgende Funktionsweise:
Die vorzugsweise magnetische Spaltabdichtung wird seitlich an die Ladebrücke angebracht. Durch die Abwärtsbewegung der Ladebrücke wird die "schmale" Unterseite in den Spalt zwischen Ladebrücke und Korpus geführt. Da die magnetische Spaltabdichtung schlaufenförmig ist, wird die Abdichtung mit zunehmender Abwärtsbewegung zusammengedrückt, wodurch der Spalt abgedichtet wird.

Durch eine Geometrie einer "halben Schlaufe" (Beispiel für inneren Streifen) in der Schlaufe wird eine Art Federwirkung erzielt, sodass die Schlaufe auseinander gedrückt wird und eine Spannung zur Außenseite erzielt wird. Die "halbe Schlaufe" kann in eine S-Form gebracht werden um die Federwirkung zu verstärken.

Ausführungsbeispiele der Erfindung werden im Folgenden anhand der beigefügten Zeichnungen näher erläutert. Darin zeigt:
- Fig. 1: eine Vorderansicht in Richtung der Längsachse gesehen auf eine Spaltabdichtung für einen Spalt einer Verladetechnik-Anordnung gemäß einer ersten Ausführungsform;
- Fig. 2: eine Ansicht wie in Fig. 1 auf eine Spaltabdichtung gemäß einer zweiten Ausführungsform;
- Fig. 3: eine perspektivische Ansicht eines Beispiels einer Verladetechnik-Anordnung am Beispiel einer Ladebrückenanordnung mit der Spaltabdichtung, wobei eine Plattform der Ladebrücke in angehobenem Zustand gezeigt ist, z.B. beim Verladen;
- Fig. 4: ein vergrößertes Detail aus Fig. 3 im Bereich des mit der Spaltabdichtung versehenen Spalts;
- Fig. 5: eine Vorderansicht auf die Ladebrückenanordnung von Fig. 3 in der Ruhestellung; und
- Fig. 6: ein vergrößertes Detail aus Fig. 5 im Bereich des mit der Spaltabdichtung versehenen Spalts.

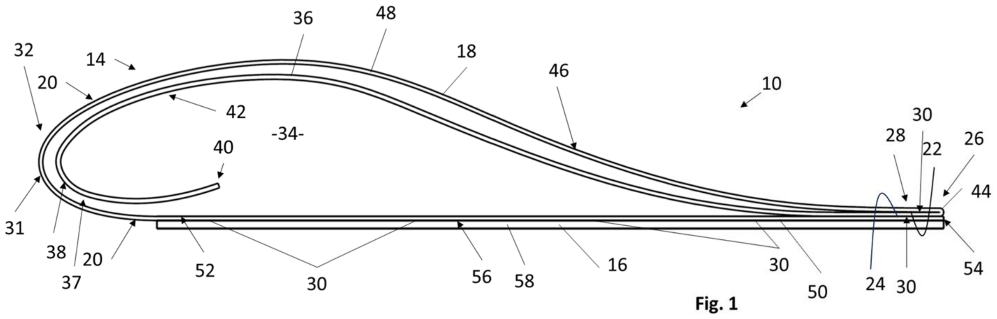

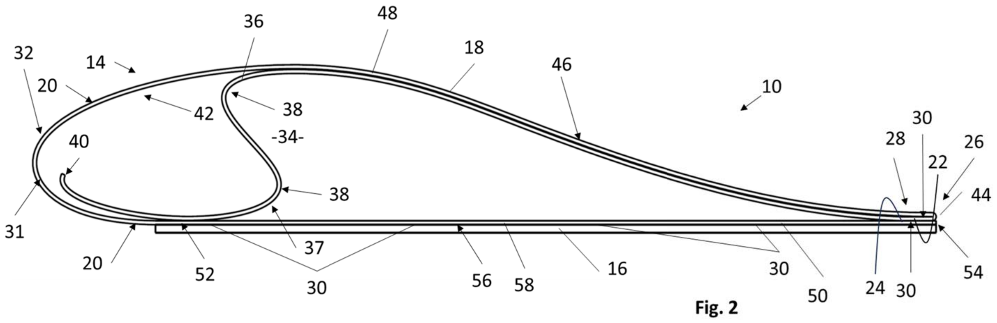

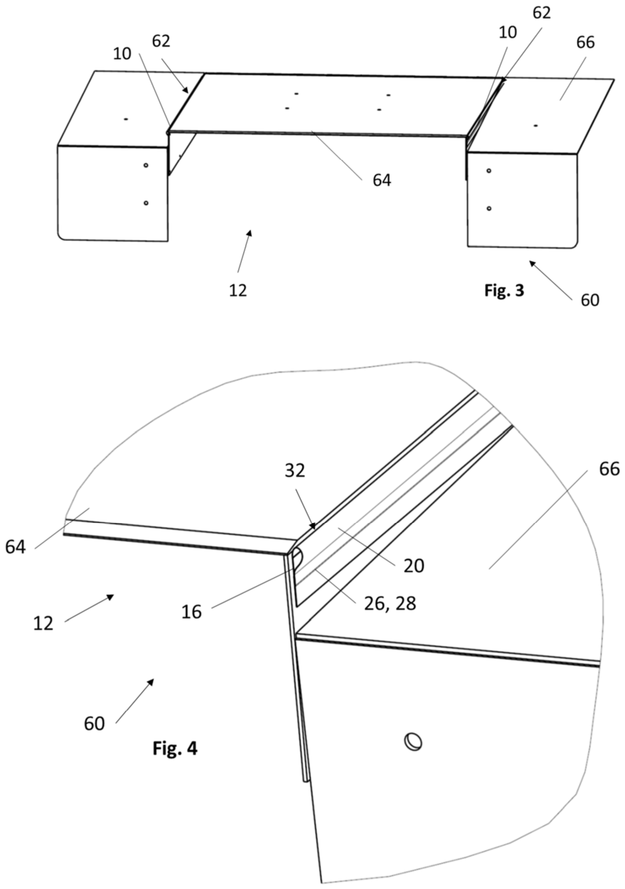

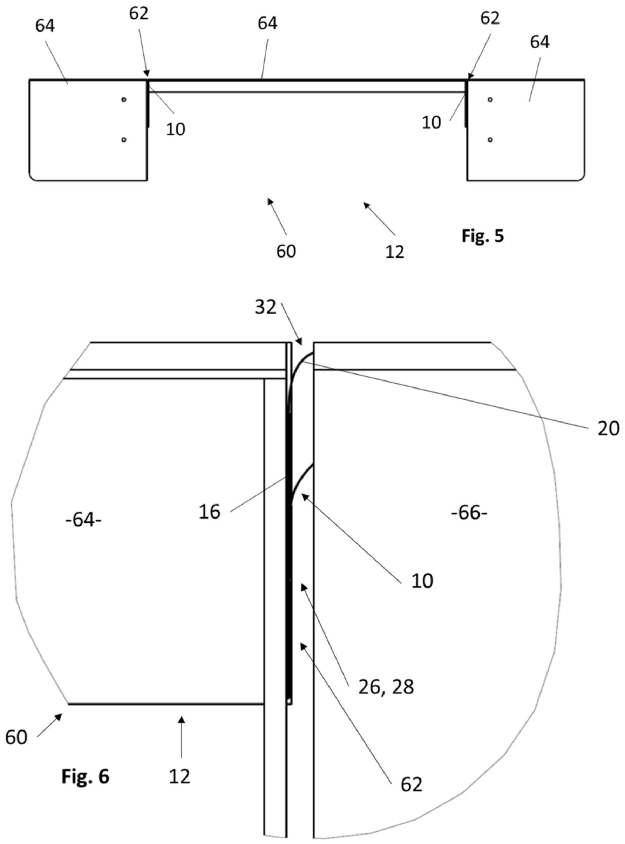

In den Fig. 1 und 2 sind Ansichten von Ausführungsformen einer Spaltabdichtung 10 dargestellt, die Fig. 4 bis 6 zeigen eine mit einer solchen Spaltabdichtung 10 versehene Ladebrücke 12.

Die Spaltabdichtung 10 ist in den Fig. 1 und 2 von vorne gesehen dargestellt, so dass der Querschnitt derselben erkennbar ist und sich die Längsrichtung der Spaltabdichtung 10 in die Zeichenebene hinein erstreckt. Die horizontale Richtung in den Fig. 1 und 2 entspricht der Breitenrichtung der Spaltabdichtung 10 und die vertikale Richtung in den Fig. 1 und 2 entspricht der Dickenrichtung der Spaltabdichtung 10.

Die Spaltabdichtung 10 weist ein Dichtungsprofil 14 und einen Befestigungs- und Trägerstreifen 16 auf.

Das Dichtungsprofil 14 ist aus wenigstens einem länglichen, streifenförmigen reversibel verformbaren Flächenelement 18 gebildet. Das Flächenelement 18 kann aus unterschiedlichen flächigen, möglichst wasser-, wind- und wetterfesten Materialien gebildet sein. Besonders bevorzugt sind Materialien verwendet, wie sie auch bei LkW-Planen oder Festzeltplanen Verwendung finden, also insbesondere gewebe- oder textilverstärkte Kunststoffe. Bei den gezeigten Ausführungsformen ist das Flächenelement 18 aus PVC-Plane mit Trägergewebe, vorzugsweise nach DIN EN ISO 2076 und weiter vorzugsweise mit einem Flächengewicht von 650 g/m² gebildet.

Das Flächenelement 18 ist zu einer äußeren Schlaufe 20 geformt. Hierzu sind ein erster streifenförmiger Oberflächenbereich 22 und ein zweiter streifenförmiger Oberflächenbereich 24, die sich beim ausgebreiteten Flächenelement 18 auf der gleichen Seite - die die Innenseite der Schlaufe 20 bildet - mit Abstand zueinander befinden, zueinander gerichtet und aneinander befestigt.

Dadurch ist ein erster Längsrandbereich 26 des Dichtungsprofils 14 - in den Fig. 1 und 2 der jeweils rechts dargestellte Bereich der Längskante des Dichtungsprofils 14 - als ein relativ zur Schlaufe 20 gesehen dünnerer Befestigungsbereich 28 ausgebildet. In dem Befestigungsbereich 28 sind die die Oberflächenbereiche 22, 24 aufweisenden Abschnitte des Flächenelements 18 fest miteinander verbunden.

Das Verbinden kann auf unterschiedliche Art und Weise erfolgen, z.B. sind Vernähen und/oder Verschweißen möglich. Bei bevorzugten Ausführungsformen erfolgt das Befestigen der unterschiedlichen Bereiche des Flächenelements 18, um hieraus das Dichtprofil 14 zu bilden, sowie der unterschiedlichen Teile 14, 16 der Spaltabdichtung 10 durch eine Klebung 30, insbesondere einen Schmelzkleber, wie z.B. ein reaktiver Polyurethan-Hotmelt - Schmelzklebstoff.

An dem zweiten, in den Fig. 1 und 2 links dargestellten Längsrandbereich 32 des Dichtungsprofils 14 ist der Umbiegungsbereich 31 der relativ zum Befestigungsbereich gesehen dickeren Schlaufe 20 ausgebildet. Die Schlaufe 20 schließt einen Hohlraum 34 ein.

Bei den dargestellten Ausführungsformen ist im Inneren der Schlaufe 20 noch ein innerer Streifen 36 vorgesehen, der in dem Befestigungsbereich 28 fest zwischen den Oberflächenbereichen 22, 24 (die auch als innere Schlaufenenden oder Innenseiten der Schlaufenenden bezeichnet werden können) angeordnet und befestigt ist. Der innere Streifen 36 hat in der Breitenrichtung gesehen eine größere Ausdehnung als die Schlaufe 20, so dass sich der innere Streifen 36 quer durch die Schlaufe 20 erstreckt und darin wenigstens eine Biegung 38 ausbildet.

Bei der Ausgestaltung der Fig. 1 ist der innere Streifen 36 als eine Art "halbe Schlaufe" ausgebildet oder mit anderen Worten J-förmig gebogen. Wie man der Fig. 2 entnehmen kann, kann der innere Streifen 36 auch mehrfach gebogen sein und z.B. S-förmig innerhalb der Schlaufe 20 ausgebildet sein.

Die weg von dem Befestigungsbereich 28 gerichtete Endkante 40 des inneren Streifens 36 endet frei. Mit anderen Worten ist der innere Streifen 36 in dem Inneren der Schlaufe 20 nur einseitig befestigt.

Die Spaltabdichtung 10 dient insbesondere zum Abdichten eines Spalts einer beweglichen Verkehrsfläche wie insbesondere bei einer beweglichen Ladebrücke 12. Die Fig. 1 und 2 zeigen Ansichten auf den magnetischen Trägerstreifen Trägerstreifen 16, auf dem ein Dichtungsabschnitt - Dichtungsprofil 14 - der Spaltabdichtung 10 angeordnet ist, wobei der innere Streifen 36 eine innere Schlaufenform mit einer Federwirkung 37 bildet.

Bei nicht dargestellten Ausführungsformen kann der innere Streifen 36 separat von dem Flächenelement 18 ausgebildet sein. Bei den dargestellten bevorzugten Ausgestaltungen ist der innere Streifen 36 ein Teilbereich oder Abschnitt des Flächenelements 18.

Zur Herstellung des Dichtungsprofils 14 gemäß den Fig. 1 und 2 wird bei einer Ausführungsform eines bevorzugten Herstellverfahrens das Flächenelement 18 bereitgestellt. Ein erster Randbereich 42 des Flächenelements 18 wird umgefaltet - Umfaltung 44 -, um den inneren Streifen 36 auszubilden. Die freie Endkante 40 des inneren Streifens 36 wird dann durch die erste Endkante 40 des Flächenelements 18 gebildet.

Im Inneren der Umfaltung 44 (und somit an dem ersten Oberflächenbereich 22) wird Kleber aufgetragen. Ein mittlerer Bereich 46 des Flächenelements 18 bildet dann den in den Fig. 1 und 2 oben dargestellten ersten Schlaufenteil 48 der Schlaufe 20. Der zweite Randbereich 50 des Flächenelements 18 wird um den inneren Streifen 36 herumgelegt und bildet dann den in den Fig. 1 und 2 unten dargestellten zweiten Schlaufenteil 52 der Schlaufe 20. Auf dem zweiten Oberflächenbereich 24 - nahe der zweiten Endkante 54 des Flächenelements 18 - wird wiederrum Kleber aufgetragen, um so die Schlaufe 20 festzulegen.

Die in den Fig. 1 und 2 nach unten weisende Fläche des zweiten Schlaufenteils 52 bildet eine Grundfläche 56, auf der der Befestigungs- und Trägerstreifen 16 befestigt wird. Auch das Anbringen des Befestigungs- und Trägerstreifens 16 kann wie oben erwähnt durch unterschiedliche Techniken erfolgen. Bei den dargestellten Ausführungen wird wiederum eine Klebung 30, vorzugsweise mit dem gleichen Kleber wie für die anderen Befestigungsflächen, verwendet. Der Befestigungs- und Trägerstreifen 16 dient als Träger für das Dichtprofil 14 und zur Befestigung des Dichtprofils 14 an einem der Elemente einer Verladetechnikanordnung - z.B. der Ladebrücke 12 -, die einen abzudichtenden Spalt begrenzen.

Bei den dargestellten Ausführungsformen ist der Befestigungs- und Trägerstreifen 16 als Magnetstreifen 58, beispielsweise aus einer handelsüblichen Magnetfolie, ausgebildet. Vorzugsweise ist der Befestigungs- und Trägerstreifen 16 starrer und/oder dicker als das Flächenelement 18. Beispielsweise wird eine Magnetfolie mit einer Dicke von 1 mm verwendet. Eine großflächige Klebung 30 dient zur weiteren Stabilisierung der Grundfläche 56.

Der Befestigungs- und Trägerstreifen 16 wird auf einem Großteil der Grundfläche 56 befestigt, d.h. auf mehr als der Hälfte der Grundfläche 56. Insbesondere wird der Befestigungsbereich 28, hier also der rechts dargestellte erste Längsrandbereich 26, fest mit dem Befestigungs- und Trägerstreifen 16 verbunden. Bei den dargestellten Ausführungen schließen Befestigungs- und Trägerstreifen 16 und Dichtungsprofil 14 an dem ersten Längsrandbereich 26 bündig ab, es ist aber auch möglich, dass der Befestigungs- und Trägerstreifen 16 über den ersten Längsrandbereich 26 des Dichtungsprofils (nach rechts in den Fig. 1 und 2) hervorragt.

Von dem ersten Längsrandbereich 26 aus erstreckt sich der Befestigungs- und Trägerstreifen 16 bei einigen Ausführungen über mehr als 60%-90% der Breite des Dichtprofils 14 und somit der Breite der Grundfläche 56. Die Breite des die Schlaufe 20 ausbildenden Bereichs des Flächenelements 18 ist so bemessen, dass sich bei der Befestigung des starreren Befestigungs- und Trägerstreifens 16 der zweite Schlaufenteil 52 in etwa eben erstreckt und der erste, hier oben dargestellte Schlaufenteil 48 eine größere Erstreckung in Breitenrichtung hat und sich von der Grundfläche 56 weg (in Fig. 1 und 2 nach oben) in Dickenrichtung auswölbt. Das Auswölben und somit Aufspannen der Schlaufe 20 in Dickenrichtung wird bei den dargestellten Ausführungsformen durch den inneren Streifen 36 und insbesondere dessen Biegung 38 unterstützt.

Die Fig. 3 bis 6 zeigen unterschiedliche Darstellungen einer Verladetechnikanordnung am Beispiel einer Ladebrückenanordnung 60. Die Ladebrückenanordnung 60 weist die Ladebrücke 12 an einer Laderampe 61 und die Spaltabdichtung 10 auf, um einen zwischen relativ zueinander beweglichen Elementen der Ladebrückenanordnung 60 gebildeten Spalt 62 abzudichten.

Beispielsweise ist der Spalt 62 zwischen einer nach oben und nach unten schwenkbaren Plattform 64 und einem Korpus oder Rahmen 66 gebildet. Der Rahmen 66 kann Teil einer Lagerung der Ladebrücke 12 oder Teil des Gebäudes, beispielsweise eine Berandung einer Ausnehmung an der Laderampe 61 für die Ladebrücke 12 sein. In den Figuren ist die Ladebrücke 12 nur schematisch dargestellt, für nähere Einzelheiten zu möglichen Ausgestaltungen der Ladebrücke 12 wird auf die detaillierten Ausführungen der Literaturstelle [10] verwiesen.

Bei den dargestellten Ausführungen ist die Spaltabdichtung 10 mittels des Magnetstreifens 58 an der beweglichen Plattform 64 derart angeordnet, dass der dünnere Befestigungsbereich 28 nach unten in das Innere des Spalts 62 hinein gerichtet ist und die Schlaufe 20 nach oben gerichtet ist. Die Fig. 3 und 4 zeigen die Ladebrücke 12 bei angehobener Plattform 64. Senkt sich die Plattform 64 wieder in die Ruhestellung ab, wird die Spaltabdichtung 10 mit dem dünneren Befestigungsbereich 28 oder erstem Längsrandbereich 26 voran (weiter) in den Spalt 62 hinein eingeführt. Aufgrund der vom ersten Längsrandbereich 26 aus zum zweiten Längsrandbereich 32 hin gesehen nur gering geneigten Außenfläche der Schlaufe 20 wird diese nur sanft beaufschlagt und zusammengedrückt.

Es treten nur relativ geringe Reibungskräfte auf, so dass das Dichtungsprofil 14 nur einem sehr geringen Verschleiß unterliegt. Versuche mit mehr als 10000 Ladebrückenbewegungen haben noch keinen messbaren Verschleiß an dem Dichtungsprofil ergeben.

Die Erfindung betrifft eine Spaltabdichtung (10) zum Abdichten eines Spalts zwischen einer beweglichen Plattform (64) und einem Rahmen (66) einer Ladebrücke (12), mit einem Dichtungsprofil (14), welches aus wenigstens einem länglichen, streifenförmigen reversibel verformbaren Flächenelement (18) gebildet ist. Zur Verbesserung der Spaltabdichtung hinsichtlich einfacher Herstellung und Langlebigkeit ist das Flächenelement (18) derart zu einer Schlaufe (20) geformt ist, dass ein erster streifenförmiger Oberflächenbereich (22) und ein zweiter streifenförmiger Oberflächenbereich (24), die sich auf der gleichen Seite des Flächenelements (18) mit Abstand zueinander befinden, zueinander gerichtet aneinander befestigt sind. Dadurch ist ein erster Längsrandbereich (26) des Dichtungsprofils (14) als ein relativ zur Schlaufe (20) gesehen dünnerer Befestigungsbereich (28) ausgebildet ist, während an dem zweiten Längsrandbereich (32) des Dichtungsprofils (14) die relativ zum Befestigungsbereich (28) gesehen dickere Schlaufe (20) ausgebildet ist, welche in dem Spalt (62) entsprechend elastisch verformt eine Abdichtung bewirkt.

### Bezugszeichenliste:

- 10: Spaltabdichtung
- 12: Ladebrücke
- 14: Dichtungsprofil
- 16: Befestigungs- und Trägerstreifen
- 18: Flächenelement
- 20: Schlaufe
- 22: erster streifenförmiger Oberflächenbereich
- 24: zweiter streifenförmiger Oberflächenbereich
- 26: erster Längsrandbereich
- 28: Befestigungsbereich
- 30: Klebung
- 31: Umbiegungsbereich
- 32: zweiter Längsrandbereich
- 34: Hohlraum
- 36: innerer Streifen
- 37: Federwirkung
- 38: Biegung
- 40: freie Endkante (des Streifens 36, z.B. erste Endkante des Flächenelements)
- 42: erster Randbereich (des Flächenelements)
- 44: Umfaltung
- 46: mittlerer Bereich (des Flächenelements)
- 48: erster Schlaufenteil
- 50: zweiter Randbereich
- 52: zweiter Schlaufenteil
- 54: zweite Endkante
- 56: Grundfläche
- 58: Magnetstreifen
- 60: Ladebrückenanordnung
- 62: Spalt
- 64: Plattform
- 66: Rahmen

## Patentansprüche

1. Spaltabdichtung (10) zum Abdichten eines Spalts zwischen einer beweglichen Plattform (64) und einem Rahmen (66) einer Ladebrücke (12), mit einem Dichtungsprofil (14), welches aus wenigstens einem länglichen, streifenförmigen reversibel verformbaren Flächenelement (18) gebildet ist, wobei das Flächenelement (18) derart zu einer Schlaufe (20) geformt ist, dass ein erster streifenförmiger Oberflächenbereich (22) und ein zweiter streifenförmiger Oberflächenbereich (24), die sich auf der gleichen Seite des Flächenelements (18) mit Abstand zueinander befinden, zueinander gerichtet aneinander befestigt sind, so dass ein erster Längsrandbereich (26) des Dichtungsprofils (14) als ein relativ zur Schlaufe (20) gesehen dünnerer Befestigungsbereich (28) ausgebildet ist, in dem die die Oberflächenbereiche (22, 24) aufweisenden Abschnitte des Flächenelements (18) fest miteinander verbunden sind, und an dem zweiten Längsrandbereich (32) des Dichtungsprofils (14) die einen Hohlraum (34) umschließende, relativ zum Befestigungsbereich (28) gesehen dickere Schlaufe (20) ausgebildet ist.

2. Spaltabdichtung (10) nach Anspruch 1, **gekennzeichnet durch** einen Befestigungs- und Trägerstreifen (16) zum Halten und Befestigen der Spaltabdichtung (10) an der Plattform (64) oder dem Rahmen (66), wobei der Befestigungs- und Trägerstreifen (16) an einer Grundfläche (56) des Dichtungsprofils (14) befestigt ist, die sich zwischen den Längsrandbereichen (26, 32) des Dichtungsprofils (14) erstreckt.

3. Spaltabdichtung (10) nach Anspruch 2, **dadurch gekennzeichnet, dass** der Befestigungs- und Trägerstreifen (16)
3.1 als Magnetstreifen (58) zur magnetischen Befestigung ausgebildet ist und/oder
3.2 sich über einen Großteil der Grundfläche (56) des Dichtungsprofils (14) erstreckt und/oder
3.3 sich von dem ersten Längsrandbereich (26) aus über mehr als die Hälfte oder mehr als zwei Drittel der Grundfläche (56) erstreckt und/oder
3.4 auf einer Außenseite des Befestigungsbereichs (28) und zumindest auf einem Teil einer Außenfläche der Schlaufe (20) befestigt ist.

4. Spaltabdichtung (10) nach einem der voranstehenden Ansprüche, **dadurch gekennzeichnet**,
4.1 dass das Dichtungsprofil (14) insgesamt aus dem einteiligen Flächenelement (18) gebildet ist und/oder
4.2 dass im Inneren des Hohlraums (34) zwischen den die Schlaufe (20) ausbildenden Bereichen des Flächenelements (18) ein innerer Streifen (36) aus reversibel verformbarem flächigem Material angeordnet ist, wobei der innere Streifen (36) fest in dem Befestigungsbereich (28) zwischen dem ersten und dem zweiten Oberflächenbereich (22, 24) befestigt ist und wobei eine freie Endkante (40) des inneren Streifens (36) in die Umbiegung der Schlaufe (20) hineinragt.

5. Spaltabdichtung (10) nach Anspruch 4, Alternativen 4.1 und 4.2,
**dadurch gekennzeichnet,**
**dass** der innere Streifen (36) aus einem ersten Randbereich (42) des Flächenelements (18) gebildet ist, wobei die Schlaufe (20) um diesen inneren Streifen (36) herum umgeschlagen ist, wobei der erste Oberflächenbereich (22) an einem mittleren Bereich (46) des Flächenelements (18) ausgebildet ist, welcher mittlere Bereich (46) relativ zu dem inneren Streifen (36) umgefaltet ist und an diesem befestigt ist, und wobei der zweite Oberflächenbereich (24) an dem zweiten Randbereich (50) des Flächenelements (18) ausgebildet ist.

6. Spaltabdichtung (10) nach einem der Ansprüche 4 oder 5, **dadurch gekennzeichnet,**
**dass** der innere Streifen (36) eine größere Breite als die Schlaufe (20) hat, wobei der innere Streifen (36) in dem Hohlraum (34) der Schlaufe (20) mit wenigstens einer Biegung (38) gebogen angeordnet ist, um die Schlaufe (20) in Dickenrichtung aufzuspannen.

7. Spaltabdichtung (10) nach Anspruch 6, **dadurch gekennzeichnet,**
**dass** der innere Streifen (36) in der Schlaufe (20) J-förmig oder S-förmig gebogen ist.

8. Spaltabdichtung (10) nach einem der voranstehenden Ansprüche, **dadurch gekennzeichnet**,
8.1 dass der Befestigungsbereich (28) innen eine Klebung (30) aufweist und/oder
8.2 dass der erste und der zweite Oberflächenbereich (22, 24) miteinander verklebt sind und/oder
8.3 dass der erste und der zweite Oberflächenbereich (22, 24) mit dem inneren Streifen (36) dazwischen verklebt sind und/oder
8.4 dass der Befestigungs- und Trägerstreifen (16) auf dem Dichtungsprofil (14) aufgeklebt ist.

9. Spaltabdichtung (10) nach einem der voranstehenden Ansprüche, **dadurch gekennzeichnet,**
**dass** das Flächenelement (18) und/oder gegebenenfalls der innere Streifen (36) aus einem flächigen textilartig verformbaren Material aus der Gruppe gebildet ist, die ein Flächenmaterial mit wenigstens einer Folienlage und einer Textillage, eine Plane aus Kunststoff mit Textilverstärkung, eine Kunststofffolie, eine faserverstärkte oder gewebeverstärkte Kunststofffolie, ein mit Kunststoff beschichtetes Textilgewebe, ein gummiertes Flächenmaterial, Gummimaterial und textil- oder faserverstärktes Gummimaterial umfasst.

10. Ladebrückenanordnung (60), umfassend eine relativ zu einem Rahmen (66) bewegliche Plattform (64) und eine Spaltabdichtung (10) nach einem der voranstehenden Ansprüche zum Abdichten eines Spalts (62) zwischen der Plattform (64) und dem Rahmen (66).

11. Ladebrückenanordnung (60) nach Anspruch 10, mit einer Spaltabdichtung (10) nach Anspruch 3, Alternative 3.1, **dadurch gekennzeichnet,**
**dass** die Spaltabdichtung (10) mittels des Magnetstreifens (58) an der Plattform (64) oder an dem Rahmen (66) befestigt ist.

12. Ladebrückenanordnung (60) nach einem der Ansprüche 10 oder 11,
**dadurch gekennzeichnet,**
**dass** die Spaltabdichtung (10) mit dem dünneren zweiten Längsrandbereich (32) nach innen in den Spalt (62) gerichtet und mit der Schlaufe (20) nach außen hin gerichtet in dem Spalt (62) angeordnet ist.

13. Verwenden einer Spaltabdichtung (10) nach einem der Ansprüche 1 bis 9 zum Abdichten eines Spalts (62) an einer Ladebrücke (12), wobei der dünnere Längsrandbereich (32) nach unten gerichtet angeordnet wird und beim Absenken der Ladebrücke (12) in den Spalt (62) eingeführt wird und die Schlaufe (20) nachgeführt wird.

14. Verwendung nach Anspruch 13, umfassend wenigstens einen oder mehrere der folgenden Schritte:
14.1 Befestigen des Dichtprofils mittels des Magnetstreifens (58) an einem beweglichen Element, einer Plattform (64) oder einem stationären Element oder einem Rahmen (66) der Ladebrücke (12);
14.2 Einführen des Dichtprofils mit dem Befestigungsbereich (28) nach vorne in den Spalt (62) beim Einfahren eines beweglichen Elements der Ladebrücke (12) in einen Rahmen (66) der Ladebrücke (12); und/oder
14.3 Zusammendrücken der Schlaufe (20) durch Einführen in den Spalt (62), wobei die Schlaufe (20) durch deren Eigenspannung und/oder durch den inneren Streifen (36) gegen die Begrenzungen des Spalts (62) gedrückt wird.

15. Verfahren zum Herstellen einer Spaltabdichtung (10) zum Abdichten eines Spalts (62) zwischen einer beweglichen Plattform (64) und einem Rahmen (66) einer Ladebrücke (12), insbesondere zum Herstellen einer Spaltabdichtung (10) nach einem der Ansprüche 1 bis 9, umfassend:
a) Bereitstellen eines länglichen, streifenförmigen reversibel verformbaren Flächenelement (18),
b) Bilden einer Schlaufe (20) durch Umschlagen des Flächenelements (18), so dass auf der gleichen Seite des Flächenelements (18) angeordnete Oberflächenbereiche (22, 24) zueinander liegen und Befestigen der zueinander gerichteten Oberflächenbereiche (22, 24) aneinander, so dass an einem ersten Längsrandbereich (26) des so gebildeten Dichtungsprofils (14) ein dünnerer Befestigungsbereich (28) und an dem anderen, zweiten Längsrandbereich (32) die Umbiegung der Schlaufe (20) mit einem Hohlraum (34) dazwischen gebildet wird und
c) Befestigen eines Befestigungs- und Trägerstreifens (16), insbesondere Magnetstreifen (58), an einer auf einer Seite der Schlaufe (20) ausgebildeten Grundfläche (56) des Dichtungsprofils (14).
